# FASCICULE DE BREVET EUROPEEN

(11) **EP 2 507 464 B1**
(45) Date de publication et mention de la délivrance du brevet: **16.10.2013**
(21) Numéro de dépôt: 10784789.9
(22) Date de dépôt: 29.11.2010
(51) Int. Cl.: E06B 5/00, G01N 1/22, G01N 1/02

(54) **PORTAIL DE DÉTECTION**
DETEKTIONSTÜR
DETECTION DOOR

(30) Priorité: 02.12.2009 FR 0958578
(43) Date de publication de la demande: 10.10.2012
(73) Titulaire: MORPHO, 92130 Issy Les Moulineaux (FR)
(72) Inventeur: FOUGEROUX, Nicolas, F-75015 Paris (FR); TOURET, Olivier, F-75015 Paris (FR)
(74) Mandataire: Maillet, Alain
(86) Numéro de dépôt international: PCT/EP2010/068442
(87) Numéro de publication internationale: WO 2011/067215

(56) Documents cités:
- US-A- 4 202 200
- US-A1- 2001 049 926
- US-A1- 2006 243 902
- US-A1- 2007 086 925

## Description

La présente invention concerne un portail de détection adapté à détecter des substances par exemple du type drogues, explosifs, etc. La présente invention concerne également un procédé de détection mis en oeuvre dans un tel portail de détection.

Un portail de détection adapté à détecter des substances du type drogues, explosifs ... est généralement mis en place dans les lieux sensibles (aéroports, gares...) pour permettre de détecter si des individus ou des objets (bagages) ont été en contact avec ces substances.

On connaît un portail de détection de l'état de la technique (voir US-4 202 200) qui comporte un châssis présentant deux montants latéraux en vis-à-vis l'un de l'autre et qui définissent entre eux un passage pour un individu ou un objet, et un dispositif de collecte des substances transportées par l'air ambiant qui est implanté au sommet des deux montants latéraux pour les relier.

Chaque montant latéral comporte une pluralité de buses d'éjection d'air, chacune étant orientée vers l'individu dans le passage afin, lorsqu'un individu traverse le portail, d'éjecter de l'air vers ledit individu pour décoller et entraîner les particules qui sont incrustées dans ses vêtements.

Le dispositif de collecte comporte une fenêtre d'introduction qui se trouve au-dessus du passage.

Les particules arrachées lors de l'éjection d'air sont entraînées vers ladite fenêtre d'introduction et sont ainsi conduites à un détecteur.

Le détecteur est adapté à reconnaître parmi les particules ainsi arrachées les particules de substances illicites, comme les drogues, les explosifs...

Lorsque le détecteur détecte l'une de ces particules, il émet un signal d'alarme pour avertir une personne du service de surveillance afin de permettre d'éventuelles actions de traitement de cette alarme.

Un tel portail de détection ne donne pas entière satisfaction car il est basé sur un principe de collecte ponctuel de particules solides des substances lié à l'émission ponctuelle des jets d'air par les buses. Or le signal ainsi obtenu, de manière ponctuelle à destination du détecteur, peut se révéler dans certaines situations opérationnelles, insuffisant. Des individus porteurs de substances à détecter peuvent alors prendre le portail de détection en défaut.

Un objet de la présente invention est de proposer un portail de détection qui ne présente pas les inconvénients de l'art antérieur et qui en particulier permet une meilleure détection des substances.

A cet effet, est proposé un portail de détection destiné à détecter des substances portées par un individu ou un objet, le portail de détection comportant :
- deux montants latéraux se faisant face et définissant entre eux un passage pour ledit individu ou ledit objet,
- des moyens de soufflage implantés dans une chambre de soufflage que l'un des montants comporte, et qui sont adaptés à souffler l'air contenu dans ladite chambre de soufflage vers l'autre montant,
- des moyens d'aspiration implantés dans une chambre d'aspiration que l'autre montant comporte, et qui sont adaptés à aspirer l'air ainsi soufflé,
- un dispositif de détection disposé en aval du passage et adapté à détecter la présence desdites substances dans l'air ainsi soufflé, et
- une canalisation de transfert débouchant par l'une de ses extrémités dans la chambre de soufflage et par l'autre de ses extrémités dans la chambre d'aspiration,

les moyens de soufflage et les moyens d'aspiration étant tels qu'un même volume d'air a le temps de traverser au moins deux fois le passage avant que ledit individu ou ledit objet traverse ledit passage.

Avantageusement, les moyens de soufflage comportent une pluralité de ventilateurs répartis sur la hauteur du montant.

Avantageusement, au moins un des ventilateurs est disposé en vis-à-vis de la zone de passage des pieds de l'individu.

Avantageusement, la canalisation de transfert présente une trappe d'évacuation mobile entre une position fermée et une position ouverte.

Avantageusement, le portail de détection comporte un dispositif de stérilisation destiné à stériliser le flux d'air circulant entre les moyens d'aspiration et les moyens de soufflage.

Avantageusement, le portail de détection comporte un dispositif de retenue destiné à prévenir la sortie de l'individu dudit portail de détection.

L'invention propose également un procédé de détection de substances portées par un individu ou un objet, et mis en oeuvre à l'aide d'un portail de détection selon l'une des variantes précédentes, ledit procédé de détection comportant :
- une étape de soufflage au cours de laquelle un volume d'air de la chambre de soufflage est soufflé par les moyens de soufflage vers les moyens d'aspiration,
- une étape d'aspiration au cours de laquelle ledit volume d'air ainsi soufflé est aspiré par lesdits moyens d'aspiration dans la chambre d'aspiration,
- une étape de détection au cours de laquelle le dispositif de détection détecte si au moins une desdites substances est présente dans ledit volume d'air ainsi soufflé,
- une étape de transfert au cours de laquelle l'air de la chambre d'aspiration est transféré vers la chambre de soufflage à travers la canalisation de transfert, et
- une étape de bouclage sur l'étape de soufflage,
les moyens de soufflage et les moyens d'aspiration étant tels qu'un même volume d'air a le temps d'effectuer au moins deux fois l'étape de soufflage et l'étape d'aspiration avant que ledit individu ou ledit objet traverse ledit passage.

Avantageusement, lorsque le portail de détection comporte un dispositif de stérilisation, il comporte une étape de stérilisation entre l'étape de détection et l'étape de soufflage.

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 représente une vue schématique en coupe d'un portail de détection selon l'invention, et
la Fig. 2 représente un organigramme d'un procédé de détection selon l'invention.

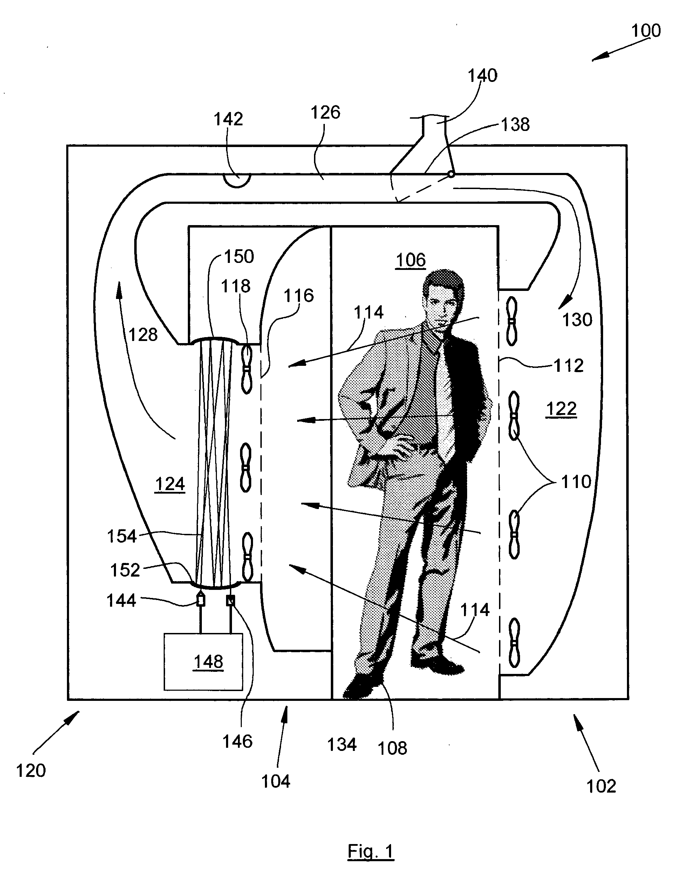

Dans la description qui suit, les termes relatifs à une position sont pris en référence à un portail de détection en fonctionnement, c'est-à-dire comme il est représenté sur la Fig. 1.

La Fig. 1 montre un portail de détection 100 selon l'invention et destiné à détecter des substances portées par un individu 108 ou un objet.

Le portail de détection 100 comporte deux montants latéraux 102 et 104 qui se font face et définissent entre eux un passage 106 pour l'individu 108 ou l'objet.

L'un des montants, ici le montant 102, comporte une chambre de soufflage 122 délimitée par une paroi aérée de soufflage 112 et dans laquelle sont implantés des moyens de soufflage 110 disposés à l'arrière de ladite paroi aérée 102 par rapport au passage 106. Les moyens de soufflage 110 sont adaptés à souffler l'air contenu dans la chambre de soufflage 122 en direction de l'autre montant 104 en faisant traverser le passage 106 à cet air.

Les flèches 114 représentent les flux d'air entre les deux montants 102 et 104.

Les moyens de soufflage 110 sont constitués par exemple ici d'une pluralité de ventilateurs. Les ventilateurs sont répartis sur la hauteur du montant 102 et comportent chacun une hélice dont l'axe de rotation est ici horizontal et perpendiculaire à la direction d'avancement de l'individu 108 dans le passage 106 et un moteur (non représenté) destiné à entraîner l'hélice en rotation autour de son axe de rotation.

L'axe de rotation de chaque hélice peut être légèrement incliné par rapport à l'horizontale.

La direction de soufflage 114 est ainsi globalement perpendiculaire à la direction d'avancement de l'individu 108.

En particulier, l'un des ventilateurs 110 est disposé en vis-à-vis de la zone de passage des pieds de l'individu 108, car les pieds constituent une zone préférentielle de transport des substances recherchées.

L'autre montant, ici le montant 104, comporte une chambre d'aspiration 124 délimitée par une paroi aérée d'aspiration 116 et dans laquelle sont implantés des moyens d'aspiration 118 disposés à l'arrière de ladite paroi aérée d'aspiration 116 par rapport au passage 106. Les moyens d'aspiration 118 sont adaptés à aspirer l'air qui est soufflé depuis le montant 102 par les moyens de soufflage 110.

Les moyens d'aspiration 118 sont constitués ici d'une pluralité de ventilateurs. Les ventilateurs sont répartis sur la hauteur du montant 104 et comportent chacun une hélice dont l'axe de rotation est ici horizontal et perpendiculaire à la direction d'avancement de l'individu 108 dans le passage 106 et un moteur (non représenté) destiné à entraîner l'hélice en rotation autour de son axe de rotation.

Chaque chambre 122, 124 débouche dans le passage 106 par la paroi aérée correspondante 112, 116.

Le portail de détection 100 comporte également en aval du passage 106 par rapport au sens de déplacement du flux d'air soufflé (114) dans le passage 106, et plus particulièrement en aval des moyens d'aspiration 118, un dispositif de détection 120. Le dispositif de détection 120 est adapté à détecter la présence des substances (drogues, explosifs, ...) dans l'air soufflé par les moyens de soufflage 110 et à avertir les personnes responsables afin que les mesures prévues dans le cas d'une détection positive soient mises en oeuvre.

Le portail de détection 100 comporte également une canalisation de transfert 126 qui débouche par l'une de ses extrémités dans la chambre de soufflage 122 et par l'autre de ses extrémités dans la chambre d'aspiration 124.

L'air qui est dans la chambre d'aspiration 124 est ainsi transféré dans la canalisation de transfert 126 (flèche 128) puis dans la chambre de soufflage 122 (flèche 130) où il est soufflé en direction de la chambre d'aspiration 124.

La mise en place de la canalisation de transfert 126 permet de générer un flux d'air (114, 128, 130) dont la majorité du volume circule en circuit fermé.

Dans le cadre de l'invention, les flux d'air 114 ne sont pas des jets d'air ponctuels mais un flux continu qui entoure au mieux l'individu 108 afin de capter et d'entraîner les particules et vapeurs qui l'entourent. Ce flux continu permet, dans la mesure des performances en temps de détection du détecteur, une analyse « à la volée » de l'individu, sans l'obligation de l'arrêter dans le passage, comme le nécessite l'état de la technique.

En outre, la vitesse du flux d'air 114 est telle qu'un même volume d'air a le temps de traverser au moins deux fois le passage 106 pendant la durée de présence de l'individu 108 dans le portail de détection 100.

En d'autres termes, les moyens de soufflage 110 et les moyens d'aspiration 118 sont adaptés à ce qu'un même volume d'air ait le temps de traverser au moins deux fois le passage 106 pendant la durée de présence de l'individu 108 dans le portail de détection 100.

Ainsi, si l'individu 108 est porteur de substances à détecter, le fait qu'un même volume d'air parcoure deux fois le passage 106, et passe donc deux fois sur la source de substance à détecter, permet d'augmenter le nombre de molécules de ces substances car ce même air a donc l'opportunité, une deuxième fois, d'entraîner des substances à détecter vers le détecteur. La concentration de ces molécules de substances à détecter est alors augmentée, ce qui facilite leur détection par le dispositif de détection 120.

Les dimensions du portail de détection 100 et les vitesses de rotation des hélices 110, 118 sont choisies, d'une part, pour que l'air qui est soufflé par les moyens de soufflage 110 soit quasiment entièrement capté par les moyens d'aspiration 118, et, d'autre part, pour que l'air qui est aspiré par les moyens d'aspiration 118 provienne pratiquement exclusivement de l'air soufflé par les moyens de soufflage 110.

Dans un mode de réalisation particulier, la largeur du passage 106 est de l'ordre de 80 cm, la hauteur du passage est de l'ordre de 210 cm et la vitesse du flux d'air dans le passage 106 est de l'ordre de 3m/s. La longueur du parcours que doit parcourir l'air entre la paroi aérée d'aspiration 116 et la paroi aérée de soufflage 112, au travers de la canalisation de transfert 126, est de l'ordre de 4m.

La profondeur du portail de détection 100, c'est-à-dire la distance que l'individu 108 doit parcourir entre les deux montants 102 et 104, est également choisie pour qu'un même volume d'air ait le temps de traverser le passage 106, de rejoindre la chambre de soufflage 122 en traversant successivement la chambre d'aspiration 124 et la canalisation de transfert 126, et de traverser à nouveau le passage 106, en moins de temps que la durée de présence de l'individu 108 dans le portail de détection 100.

Dans un mode de réalisation particulier, la profondeur du portail de détection 100 est de l'ordre de 80cm.

Bien sûr, si pour certaines contraintes, il n'est pas possible qu'un même volume d'air traverse deux fois le passage 106 pendant le temps mis par un même individu 108 pour le traverser, il est possible de prévoir que le portail de détection 100 comporte un dispositif de retenue qui empêche la sortie de l'individu 108 du portail de détection 100 le temps nécessaire.

Le dispositif de retenue peut être par exemple une porte qui est disposée en sortie du portail de détection 100 et qui reste fermée le temps qu'un même volume d'air traverse deux fois le passage 106.

Le dispositif de retenue peut être par exemple un signal lumineux ou sonore qui indique à l'individu s'il peut ou non sortir du portail de détection 100.

Le fait qu'un même volume d'air traverse deux fois le passage 106 en canalisant au mieux le flux d'air 114 dans le passage 106, permet théoriquement de doubler la concentration en molécules de substances à détecter.

Le déplacement latéral du flux d'air (114) par rapport à l'individu 108 permet d'entourer au mieux l'individu 108, en couvrant avec la même efficacité les zones allant des pieds à la tête, et ainsi de récupérer au maximum les molécules de substances à détecter sur toutes les zones du corps de l'individu 108. Par ailleurs, il optimise le déplacement d'un côté à l'autre de l'individu 108 et permet de le recouvrir entièrement, contrairement à un flux d'air allant de bas en haut.

Dans le cas où l'air qui circule dans le portail de détection 100 doit être purgé, par exemple après une détection positive à une substance, la canalisation de transfert 126 présente une trappe d'évacuation 138 qui est mobile entre une position fermée (trait continu) et une position ouverte (trait pointillé). La position fermée correspond à la position de fonctionnement normal, c'est-à-dire lorsque l'air circule en circuit fermé. La position ouverte correspond à la position dans laquelle l'air qui circule dans la canalisation de transfert 126 est évacué. A cette fin, la trappe d'évacuation 138 débouche dans une cheminée 140 qui comporte éventuellement un dispositif d'extraction.

Pour éviter une éventuelle propagation de germes pathogènes entre deux individus 108, un dispositif de stérilisation 142, par exemple du type générateur d'UV, peut par exemple être implanté dans le portail de détection 100. Le dispositif de stérilisation 142 est disposé de manière à stériliser le flux d'air circulant entre les moyens d'aspiration 118 et les moyens de soufflage 110, et, en particulier, il est disposé dans la canalisation de transfert 126. Cette technique n'a pas d'incidence sur les molécules des substances à détecter.

Dans le mode de réalisation de l'invention présenté sur la Fig. 1, le dispositif de détection 120 constitue un dispositif de détection à base de spectrométrie infrarouge.

Le dispositif de détection 120 comporte un émetteur 144 du type émetteur infrarouge, un capteur 146, un analyseur 148, un premier miroir 150 et un deuxième miroir 152. L'émetteur 144 est disposé en vis-à-vis d'une première fenêtre réalisée dans le deuxième miroir 152 et le capteur 146 est disposé en vis-à-vis d'une deuxième fenêtre réalisée dans le deuxième miroir 152.

L'émetteur 144 émet un faisceau lumineux 154 qui traverse la première fenêtre et vient se réfléchir sur le premier miroir 150. Après de multiples réflexions entre les deux miroirs 150 et 152, le faisceau lumineux 154 traverse la deuxième fenêtre et est capté par le capteur 146.

L'information reçue par le capteur 146 est transmise à l'analyseur 148 qui analyse si, pour certaines fréquences, la puissance du signal lumineux s'est affaiblie caractérisant ainsi la présence dans l'air de molécules particulières. Si ces fréquences sont représentatives d'une substance à détecter, l'analyseur 148 transmet un signal d'alerte vers un dispositif d'alarme approprié.

La forme des parois canalisant le flux d'air 114, 128, 130 est telle que les perturbations aérodynamiques sont minimisées. L'implantation et la puissance des moyens de soufflage 110, des moyens d'aspiration 118 sont tels que le flux d'air 114 dans le passage 106 reste confiné au maximum à l'intérieur du portail de détection 100 et que l'air extérieur reste au maximum à l'extérieur du portail de détection 100.

Pour éviter que des particules se collent sur les parois du portail de détection 100, celles-ci sont recouvertes d'un revêtement anti-adhérent.

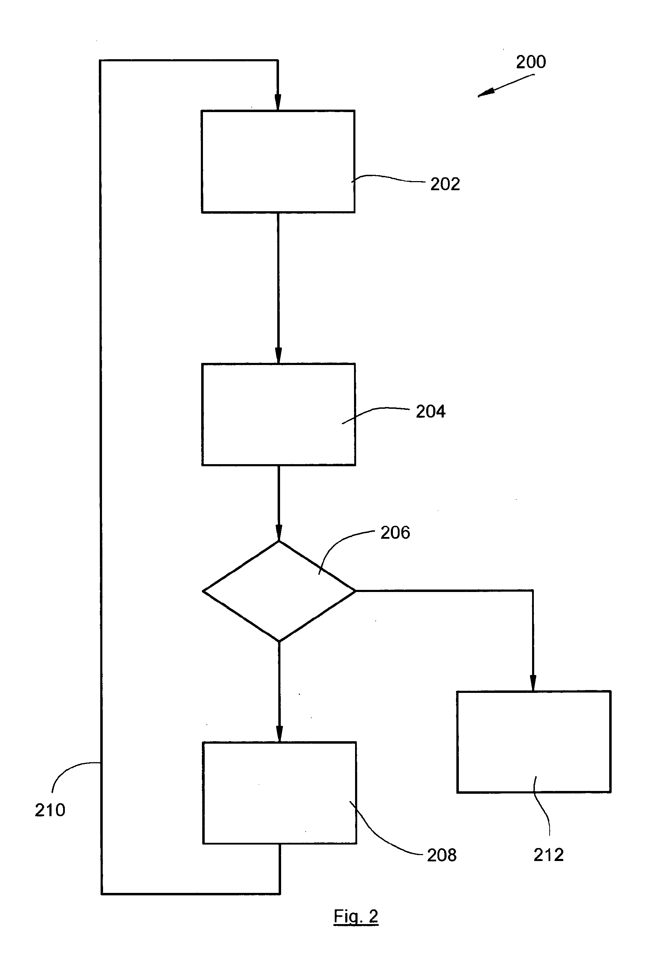

La Fig. 2 montre un procédé de détection des substances portées par ledit individu 108 où ledit objet est mis en oeuvre à l'aide du portail de détection 100. Le procédé de détection 200 comporte :
- une étape de soufflage 202 au cours de laquelle un volume d'air de la chambre de soufflage 122 est soufflé par les moyens de soufflage 110 vers les moyens d'aspiration 118,
- une étape d'aspiration 204 au cours de laquelle ledit volume d'air ainsi soufflé est aspiré par lesdits moyens d'aspiration 118 dans la chambre d'aspiration 124,
- une étape de détection 206 au cours de laquelle le dispositif de détection détecte si au moins une desdites substances est présente dans ledit volume d'air ainsi soufflé,
- une étape de transfert 208 au cours de laquelle l'air de la chambre d'aspiration 124 est transféré vers la chambre de soufflage 122 à travers la canalisation de transfert 126, et
- une étape de bouclage 210 sur l'étape de soufflage.

Les moyens de soufflage 110 et les moyens d'aspiration 118 sont adaptés de manière à ce qu'un même volume d'air ait le temps d'effectuer au moins deux fois l'étape de soufflage 202 et l'étape d'aspiration 204 avant que ledit individu 108 ou ledit objet traverse ledit passage 106.

Ainsi, l'étape de détection 206 s'effectue sur un volume d'air dont la concentration en molécule de substances à détecter est augmentée.

L'étape de soufflage 202, l'étape d'aspiration 204, l'étape de détection 206 et l'étape de transfert 208 s'effectuent de manière continue, c'est-à-dire que l'air est en permanence en mouvement.

Si au cours de l'étape de détection 206, une détection positive d'une des substances intervient, le processus se poursuit par une étape d'alerte 212 au cours de laquelle une information représentative de la détection positive est envoyée vers les personnes responsables.

Lorsque le portail de détection 100 comporte le dispositif de stérilisation 142, le procédé de détection 200 comporte une étape de stérilisation entre l'étape de détection 206 et l'étape de soufflage 202.

Lorsque le portail de détection 100 comporte le dispositif de retenue, le procédé de détection 200 comporte une étape de maintien au cours de laquelle le dispositif de retenue empêche l'individu 108 de sortir du portail de détection 100.

Bien entendu, la présente invention n'est pas limitée aux exemples et modes de réalisation décrits et représentés, mais elle est susceptible de nombreuses variantes accessibles à l'homme de l'art.

Par exemple, l'invention a été plus particulièrement décrite dans le cas où un même volume d'air traverse deux fois le passage 106, mais elle s'applique de la même manière dans le cas où il est préféré que le même volume d'air traverse plus de deux fois le passage 106.

## Revendications

1. Portail de détection (100) destiné à détecter des substances portées par un individu (108) ou un objet, le portail de détection (100) comportant :
- deux montants latéraux (102, 104) se faisant face et définissant entre eux un passage (106) pour ledit individu (108) ou ledit objet,
- des moyens de soufflage (110) implantés dans une chambre de soufflage (122) que l'un des montants (102) comporte, et qui sont adaptés à souffler l'air contenu dans ladite chambre de soufflage (122) vers l'autre montant (104),
- des moyens d'aspiration (118) implantés dans une chambre d'aspiration (124) que l'autre montant (104) comporte, et qui sont adaptés à aspirer l'air ainsi soufflé,
- un dispositif de détection (120) disposé en aval du passage (106) et adapté à détecter la présence desdites substances dans l'air ainsi soufflé, et
- une canalisation de transfert (126) débouchant par l'une de ses extrémités dans la chambre de soufflage (122) et par l'autre de ses extrémités dans la chambre d'aspiration (124),
les moyens de soufflage (110) et les moyens d'aspiration (118) étant tels qu'un même volume d'air a le temps de traverser au moins deux fois le passage (106) avant que ledit individu (108) ou ledit objet traverse ledit passage (106).

2. Portail de détection (100) selon la revendication 1, **caractérisé en ce que** les moyens de soufflage (110) comportent une pluralité de ventilateurs répartis sur la hauteur du montant (102).

3. Portail de détection (100) selon la revendication 2, **caractérisé en ce qu'**au moins un des ventilateurs (110) est disposé en vis-à-vis de la zone de passage des pieds de l'individu (108).

4. Portail de détection (100) selon l'une des revendications 1 à 3, **caractérisé en ce que** la canalisation de transfert (126) présente une trappe d'évacuation (138) mobile entre une position fermée et une position ouverte.

5. Portail de détection (100) selon l'une des revendications 1 à 4, **caractérisé en ce qu'**il comporte un dispositif de stérilisation (142) destiné à stériliser le flux d'air circulant entre les moyens d'aspiration (118) et les moyens de soufflage (110).

6. Portail de détection (100) selon l'une des revendications 1 à 5, **caractérisé en ce qu'**il comporte un dispositif de retenue destiné à prévenir la sortie de l'individu (108) dudit portail de détection (100).

7. Procédé de détection (200) de substances portées par un individu (108) ou un objet, et mis en oeuvre à l'aide d'un portail de détection (100) selon l'une des revendications précédentes, ledit procédé de détection comportant :
- une étape de soufflage (202) au cours de laquelle un volume d'air de la chambre de soufflage (122) est soufflé par les moyens de soufflage (110) vers les moyens d'aspiration (118),
- une étape d'aspiration (204) au cours de laquelle ledit volume d'air ainsi soufflé est aspiré par lesdits moyens d'aspiration (118) dans la chambre d'aspiration (124),
- une étape de détection (206) au cours de laquelle le dispositif de détection détecte si au moins une desdites substances est présente dans ledit volume d'air ainsi soufflé,
- une étape de transfert (208) au cours de laquelle l'air de la chambre d'aspiration (124) est transféré vers la chambre de soufflage (122) à travers la canalisation de transfert (126), et
- une étape de bouclage (210) sur l'étape de soufflage,
les moyens de soufflage (110) et les moyens d'aspiration (118) étant tels qu'un même volume d'air a le temps d'effectuer au moins deux fois l'étape de soufflage (202) et l'étape d'aspiration (204) avant que ledit individu (108) ou ledit objet traverse ledit passage (106).

8. Procédé de détection (200) selon la revendication 7, **caractérisé en ce que**, lorsque le portail de détection (100) comporte un dispositif de stérilisation (142), il comporte une étape de stérilisation entre l'étape de détection (206) et l'étape de soufflage (202).

## Patentansprüche

1. Sicherheitsschleuse (100), dazu bestimmt, von einer Person (108) oder einem Objekt getragene Substanzen zu erfassen, wobei die Sicherheitsschleuse (100) aufweist:
- zwei seitliche Pfosten (102, 104), die einander gegenüberliegen und zwischen sich einen Durchgang (106) für die Person (108) oder das Objekt definieren;
- Gebläsemittel (110), die in eine Gebläsekammer (122) eingebaut sind, die einer der Pfosten (102) aufweist, und die dafür ausgelegt sind, dass sie Luft, die in der Gebläsekammer (122) enthalten ist, in Richtung des anderen Pfostens (104) blasen,
- Ansaugmittel (118), die in eine Ansaugkammer (124) eingebaut sind, die der andere Pfosten (104) aufweist, und dafür ausgelegt sind, dass sie die auf diese Weise geblasene Luft ansaugen,
- eine Erfassungsvorrichtung (120), die dem Durchgang (106) nachgelagert angeordnet ist und dafür ausgelegt ist, dass sie das Vorhandensein der Substanzen in der auf diese Weise geblasenen Luft erfasst, und
- einen Übertragungskanal (126), der mit seinem einen Ende in der Gebläsekammer (122) und mit seinem anderen Ende in der Ansaugkammer (124) mündet,
wobei die Gebläsemittel (110) und die Ansaugmittel (118) so beschaffen sind, dass ein gleiches Luftvolumen die Zeit hat, den Durchgang (106) mindestens zweimal zu durchqueren, bevor die Person (108) oder das Objekt den Durchgang (106) durchquert.

2. Sicherheitsschleuse (100) nach Anspruch 1, **dadurch gekennzeichnet, dass** die Gebläsemittel (110) eine Vielzahl von Ventilatoren aufweisen, die über die Höhe des Pfostens (102) verteilt sind.

3. Sicherheitsschleuse (100) nach Anspruch 2, **dadurch gekennzeichnet, dass** mindestens einer der Ventilatoren (110) gegenüber der Durchgangszone der Füße der Person (108) angeordnet ist.

4. Sicherheitsschleuse (100) nach einem der Ansprüche 1 bis 3, **dadurch gekennzeichnet, dass** der Übertragungskanal (126) eine Auslassklappe (138) aufweist, die zwischen einer geschlossen Stellung und einer offenen Stellung beweglich ist.

5. Sicherheitsschleuse (100) nach einem der Ansprüche 1 bis 4, **dadurch gekennzeichnet, dass** sie eine Sterilisierungsvorrichtung (142) aufweist, die dazu bestimmt ist, den Luftstrom zu sterilisieren, der zwischen den Ansaugmitteln (118) und den Gebläsemitteln (110) zirkuliert.

6. Sicherheitsschleuse (100) nach einem der Ansprüche 1 bis 5, **dadurch gekennzeichnet, dass** sie eine Rückhaltevorrichtung aufweist, die dazu bestimmt ist, zu verhindern, dass die Person (108) die Sicherheitsschleuse (100) verlässt.

7. Erfassungsverfahren (200) für Substanzen, die von einer Person (108) oder einem Objekt getragen werden, und das mittels der Sicherheitsschleuse (100) nach einem der vorhergehenden Ansprüche umgesetzt wird, wobei das Erfassungsverfahren aufweist:
- einen Gebläseschritt (202), während dem ein Luftvolumen von der Gebläsekammer (122) durch die Gebläsemittel (110) in Richtung der Ansaugmittel (118) geblasen wird,
- einen Ansaugschritt (204), während dem das auf diese Weise geblasene Luftvolumen durch die Ansaugmittel (118) in der Ansaugkammer (124) angesaugt wird,
- einen Erfassungsschritt (206), während dem die Erfassungsvorrichtung erfasst, ob mindestens eine der Substanzen in dem auf diese Weise geblasenen Luftvolumen vorhanden ist,
- einen Übertragungsschritt (208), während dem die Luft der Ansaugkammer (124) durch den Übertragungskanal (126) zur Gebläsekammer (122) übertragen wird, und
- einen Rückführungsschritt (210) zum Gebläseschritt,
wobei die Gebläsemittel (110) und die Ansaugmittel (118) so beschaffen sind, dass ein gleiches Luftvolumen die Zeit hat, den Gebläseschritt (202) und den Ansaugschritt (204) mindestens zweimal auszuführen, bevor die Person (108) oder das Objekt den Durchgang (106) durchquert.

8. Erfassungsverfahren (200) nach Anspruch 7, **dadurch gekennzeichnet, dass**, wenn die Sicherheitsschleuse (100) eine Sterilisierungsvorrichtung (142) aufweist, sie einen Sterilisierungsschritt zwischen dem Erfassungsschritt (206) und dem Gebläseschritt (202) aufweist.

## Claims

1. Detection gate (100) intended to detect substances carried by an individual (108) or an object, the detection gate (100) comprising:
- two lateral uprights (102, 104) facing each other and defining between them a passage (106) for the said individual (108) or the said object,
- blowing means (110) installed in a blowing chamber (122) that one of the uprights (102) has, and which are adapted to blow the air contained in the said blowing chamber (122) towards the other upright (104),
- exhaust means (118) installed in an exhaust chamber (124) that the other upright (104) has, and which are able to suck in the air thus blown,
- a detection device (120) disposed downstream from the passage (106) and able to detect the presence of the said substances in the air thus blown, and
- a transfer pipe (126) emerging through one of its ends in the blowing chamber (122) and through its other end in the exhaust chamber (124),
the blowing means (110) and the exhaust means (118) being such that the same volume of air has the time to travel across the passage (106) at least twice before the said individual (108) or the said object passes through the said passage (106).

2. Detection gate (100) according to claim 1, **characterised in that** the blowing means (110) comprise a plurality of fans distributed over the height of the upright (102).

3. Detection gate (100) according to claim 2, **characterised in that** at least one of the fans (110) is placed opposite the area where the feet of the individual (108) pass.

4. Detection gate (100) according to one of claims 1 to 3, **characterised in that** the transfer pipe (126) has a discharge flap (138) able to move between a closed position and an open position.

5. Detection gate (100) according to one of claims 1 to 4, **characterised in that** it comprises a sterilisation device (142) intended to sterilise the air flow circulating between the exhaust means (118) and the blowing means (110).

6. Detection gate (100) according to one of claims 1 to 5, **characterised in that** it comprises a holding device intended to prevent the individual (108) leaving the said detection gate (100).

7. Method for detecting (200) substances carried by an individual (108) or an object, and implemented by means of a detection gate (100) according to one of the preceding claims, the said detection method comprising:
- a blowing step (202) during which a volume of air in the blowing chamber (122) is blown by the blowing means (110) towards the exhaust means (118),
- an exhaust step (204) during which the said volume of air thus blown is exhausted by the exhaust means (118) in the exhaust chamber (124),
- a detection step (206) during which the detection device detects whether at least one of the said substances is present in the said volume of air thus blown,
- a transfer step (208) during which the air in the exhaust chamber (124) is transferred to the blowing chamber (122) through the transfer pipe (126), and
- a step (210) of looping back onto the blowing step,
the blowing means (110) and the exhaust means (118) being such that the same volume of air has the time to make the blowing step (202) and the exhaust step (204) twice before that the said individual (108) or the said object passes through the said passage (106).

8. Detection method (200) according to claim 7, **characterised in that**, when the detection gate (100) comprises a sterilisation device (142), it comprises a sterilisation step between the detection step (206) and the blowing step (202).
